# EUROPEAN PATENT APPLICATION

(11) **EP 4 779 464 A1**
(43) Date of publication of application: **22.07.2026**
(21) Application number: 24864633.3
(22) Date of filing: 10.09.2024
(51) Int. Cl.: G06F 9/451, G06F 3/0481, G06F 3/0484

(54) **TOPIC INTERFACE DISPLAY METHOD AND APPARATUS, AND ELECTRONIC DEVICE AND STORAGE MEDIUM**

(30) Priority: 11.09.2023 CN 202311167704
(71) Applicant: Beijing Zitiao Network Technology Co., Ltd., Beijing 100190 (CN)
(72) Inventor: HUANG, Zishuo, Beijing 100028 (CN); ZHAO, Chunmeng, Beijing 100028 (CN)
(74) Representative: Grünecker Patent- und Rechtsanwälte PartG mbB
(86) International application number: PCT/CN2024/118095
(87) International publication number: WO 2025/055917

(57) **Abstract**

The embodiment of the disclosure provides a method, apparatus , electronic device and a storage medium for displaying a topic interface. The method includes: receiving a first interface display operation for a target topic; displaying a topic interface of the target topic in response to the first interface display operation, where the topic interface comprises an interaction area and a media content area, the interaction area is configured to collectively present at least part of comment information associated with the target topic, the comment information comprises topic comment information for the target topic and/or media content comment information for media content associated with the target topic, and the media content area is configured to present at least part of the media content associated with the target topic. By adopting the technical solutions, the content displayed in the topic interface can be enriched, the interaction efficiency is improved, and the efficiency of the user viewing different types of content in the topic interface is improved.

## Description

This application claims the benefits of Chinese Patent Application No. 202311167704.3, filed September 11, 2023, entitled "Method, Apparatus, Electronic Device, and Storage Medium for Displaying a Topic Interface", the entire contents of which are incorporated herein by reference.

### FIELD

Embodiments in the disclosure relate to the technical field of computers, in particular to a method, apparatus, electronic device, and storage medium for displaying a topic interface.

### BACKGROUND

In some applications, a user may view media content related to a topic in a topic interface. However, the display mode of content in the topic interface is relatively limited, and cannot meet user requirement for information viewing.

### SUMMARY

The embodiment of the disclosure provides a topic interface display method and device, electronic equipment and a storage medium.

According to a first aspect, an embodiment in the disclosure provides method for displaying a topic interface, including: receiving a first interface display operation for a target topic; displaying a topic interface of the target topic in response to the first interface display operation, where the topic interface comprises an interaction area and a media content area, the interaction area is configured to collectively present at least part of comment information associated with the target topic, the comment information comprises topic comment information for the target topic and/or media content comment information for media content associated with the target topic, and the media content area is configured to present at least part of the media content associated with the target topic.

According to a second aspect, an embodiment in the disclosure further provides an apparatus for displaying a topic interface, including: an operation receiving module configured to receive a first interface display operation for a target topic; and a first interface display module configured to display a topic interface of the target topic in response to the first interface display operation, where the topic interface comprises an interaction area and a media content area, the interaction area is configured to collectively present at least part of comment information associated with the target topic, the comment information comprises topic comment information for the target topic and/or media content comment information for media content associated with the target topic, and the media content area is configured to present at least part of the media content associated with the target topic.

In a third aspect, an embodiment in the disclosure further provides an electronic device, including: one or more processors; and a memory, configured to store one or more programs, where when the one or more programs are executed by the one or more processors, the one or more processors perform the method for displaying a topic interface according to the embodiments in the disclosure.

In a fourth aspect, an embodiment in the disclosure further provides a computer-readable storage medium having a computer program stored thereon, the program, when executed by a processor, performs the method for displaying a topic interface according to the embodiments in the disclosure.

### BRIEF DESCRIPTION OF DRAWINGS

The above and other features, advantages, and aspects of various embodiments in the disclosure will become more apparent from the following detailed description in conjunction with the accompanying drawings. Throughout the drawings, identical or similar reference numbers refer to the same or similar elements. It should be understood that the drawings are illustrative in nature, and the components and elements may not necessarily drawn to scale.
FIG. 1 is a flow diagram illustrating a method for displaying a topic interface according to an embodiment in the disclosure;
FIG. 2 is a schematic diagram of a display of a topic interface according to an embodiment in the disclosure;
FIG. 3 is a schematic diagram of displaying a comment information interface according to an embodiment in the disclosure;
FIG. 4 is a schematic flowchart of another topic interface display method according to an embodiment in the disclosure;
FIG. 5 is a schematic diagram of a display of a comment panel according to an embodiment in the disclosure;
FIG. 6 is a schematic diagram of a display of a reply information input area according to an embodiment in the disclosure;
FIG. 7 is a structural block diagram of a topic interface display device according to an embodiment in the disclosure; and
FIG. 8 is a schematic structural diagram of an electronic device according to an embodiment in the disclosure.

### DETAILED DESCRIPTION

Embodiments in the disclosure will be described in more detail below with reference to the accompanying drawings. While certain embodiments in the disclosure are shown in the drawings, it is to be understood that the disclosure may be implemented in various forms, and should not be construed as limited to the embodiments set forth herein, and vice versa. It should be understood that the drawings and embodiments in the disclosure are for illustrative purposes only and are not intended to limit the scope of the disclosure.

It should be understood that the steps recited in the method embodiments in the disclosure may be performed in different orders, and/or in parallel. Further, the method embodiments may include additional steps and/or omit performing some of the illustrated steps. The scope of the disclosure is not limited in this regard.

As used herein, the term "comprising/including" and variations thereof are open-ended, i.e., "including but not limited to". The term "based on" means "based at least in part on". The term "one embodiment" means "at least one embodiment"; the term "another embodiment" means "at least one further embodiment"; the term "some embodiments" means "at least some embodiments". Relevant definitions of other terms will be given below.

It should be noted that terms such as "first" and "second" mentioned in this disclosure are merely used to distinguish different apparatuses, modules, or units, and are not intended to limit the order of functions performed by the apparatuses, modules, or units or the mutual dependency relationship.

It should be noted that the modification of "a" and "a plurality" mentioned in this disclosure is illustrative and not limiting, and those skilled in the art should understand that "one or more" should be understood unless the context clearly indicates otherwise.

The names of messages or information exchanged among multiple devices in the embodiments in the disclosure are for illustrative purposes only and are not intended to limit the scope of such messages or information.

It can be understood that, prior to implementing the technical solutions disclosed in the embodiments in the disclosure, appropriate measures must be taken in accordance with relevant laws and regulations to inform users of the types, usage scope, usage scenario and the like of the personal information involved, and to obtain user authorization.

For example, in response to receiving an active request from a user, prompt information is sent to the user to explicitly inform the user that the requested operation acquires the collection and use of the user's personal information. Therefore, the user is allowed to independently decide, based on the prompt, whether to provide personal information to software or hardware e.g., electronic device, application, server, or storage medium that performs the operations of the disclosed technical solutions.

As an optional but non-limiting implementation, the method of sending the prompt information upon receiving an active request from the user may include, for example, a pop-up window in which the prompt information may be presented in text form. In addition, the pop-up window may further include a selection control for the user to select "agree" or "Disagree" to provide personal information to the electronic device.

It may be understood that the process of notification and obtaining user authorization described above is merely illustrative, and does not constitute a limitation on the embodiments in the disclosure, and other methods complying with related laws and regulations may also be applied to the embodiments in the disclosure.

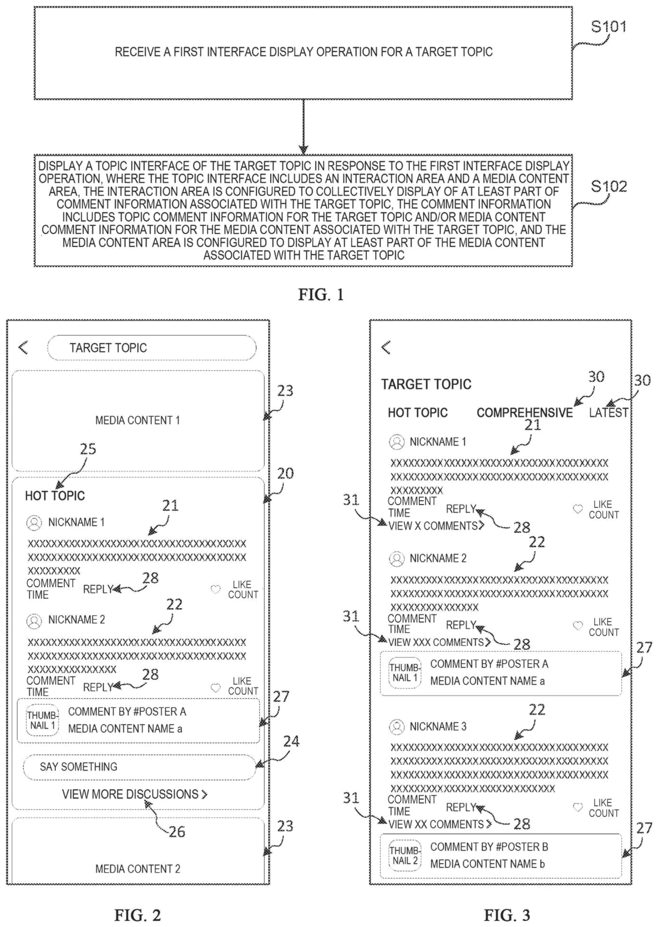

FIG. 1 is a flow diagram illustrating method for displaying a topic interface according to an embodiment in the disclosure. The method may be performed by an apparatus for displaying a topic interface, which may be implemented by software and/or hardware, and configured within an electronic device, typically in a mobile phone or a tablet computer. The method for displaying a topic interface provided in the embodiments in the disclosure is applicable to the scenario in which comment information associated with the topic is displayed collectively in a preset area of the topic interface, while media content associated with the topic is displayed outside the preset area. As shown in FIG. 1, the method for displaying a topic interface provided in this embodiment may include the following steps.

S101: Receive a first interface display operation for a target topic.

The first interface display operation may be a trigger operation that instructs the display of the topic interface for a specific topic. The specific manner in which the first interface display operation is executed is not limited. The target topic may refer to a topic corresponding to the first interface display operation, that is, the topic for which the interface is instructed to be displayed.

In this embodiment, when a current user wishes to view a topic interface of a certain topic, the first interface display operation for the topic may be performed. Accordingly, the current application may receive the first interface display operation performed by the current user.

S102: Display a topic interface of the target topic in response to the first interface display operation, where the topic interface includes an interaction area and a media content area, the interaction area is configured to collectively display of at least part of comment information associated with the target topic, the comment information includes topic comment information for the target topic and/or media content comment information for the media content associated with the target topic, and the media content area is configured to display at least part of the media content associated with the target topic.

The topic interface for a topic may be an interface for displaying content associated with the topic, which may include, but is not limited to, comment information and media content associated with the topic. The topic interface may include an interaction area and a media content area. The interaction area may be configured to display collectively at least part of the comment information associated with the topic, which may include topic comment information and/or media content comment information. The media content area may be configured to display at least part of the media content associated with the topic. For example, the topic interface may include one interaction area and at least one media content area. The topic comment information may refer to comment information for the topic; and the media content comment information may refer to comment information of the media content associated with the topic, for example, comment information made under the media content associated with the topic.

Specifically, when the first interface display operation is received from the current user for the target topic, the topic interface of the target topic may be displayed. In the interaction area 20 of the topic interface, at least part of the comment information associated with the target topic is displayed collectively, for example, at least part of the topic comment information 21 and/or the media content comment information 22 associated with the target topic are displayed collectively. In the media content area 23 of the topic interface, at least part of the media content associated with the target topic is displayed, as shown in FIG. 2.

In this embodiment, by collectively displaying at least part of the comment information associated with the topic in the interaction area of the topic interface, and displaying the media content associated with the topic is displayed outside the interaction area, this solution provides a more diverse content presentation compared to technical solutions that only display media content or mix media content and comment information with the topic interface. This improves the richness of the topic interface, enhances interaction efficiency, and increases the user's efficiency in viewing different types of content. Furthermore, by collectively displaying topic comment information and/or media content comment information within the interaction area, the topic interface can be further enriched to meet user requirements for viewing different types of comment information.

Still referring to FIG. 2, optionally, a comment input control 24 may also be displayed in the interaction area 20, which is configured to allow the current user to send the topic comment information associated with the target topic. The display style of the comment input control 24 is not limited.

Accordingly, when the current user wishes to send the topic comment information associated with the target topic, for example, when the current user post a comment about the target topic, the comment input control may be triggered. In response, upon detecting that the current user has triggered the comment input control displayed in the interaction area, the application may display an input area for the topic comment information to allow the current user to input the topic comment information for the target topic. Upon receiving a send operation from the current user for the topic comment information input by the current user, the topic comment information may be sent, and the topic comment information sent by the current user may be further displayed in the interaction area, thereby allowing the current user to view the submitted topic comment information.

In some embodiments, after the topic interface of the target topic is displayed, the method may further include: displaying a comment information interface of the target topic in response to a second interface display operation performed within the topic interface, and displaying the comment information associated with the target topic in the comment information interface.

The comment information interface for a topic may be an interface for displaying comment information associated with the topic. Different from the comment information interface of the topic, which by default may display at least some comment information and media content associated with the topic, the comment information interface may, by default, display only comment information and omit media content. That is, when initially switching into the comment information interface, media content associated with the topic may not be displayed.

The second interface display operation may be a trigger operation that instructs the display of the comment information interface for the target topic. The area within the topic interface where the second interface display operation is applied may be flexibly set as required. For example, the second interface display operation may be performed in a designated area in the topic interface, for example, an interaction area, a media content area, an area outside both the interaction area and the media content area, and the like. Optionally, the second interface display operation is performed in the interaction area. For example, when the user views at least part of the comment information associated with the target topic in the interaction area, the user may perform the second interface display operation within the area to switch to the comment information interface and view more comment information associated with the target topic.

In the above embodiments, the manner in which the second interface display operation is performed is not limited. For example, it may include triggering a specific position in the interaction area 20 or activating a control displayed within the interaction area 20. Optionally, as shown in FIG. 2, the interaction area 20 may also display area title information 25 and/or a comment viewing control 26, which may be used to trigger the second interface display operation.

The area title information 23 may be title information displayed in the interaction area 20, representing the heading of the interaction area 20. The comment information viewing control 26 may be a control configured to trigger the viewing of more comment information associated with the target topic.

Accordingly, when the current user wishes to view more comment information associated with the target topic, the user may perform the second interface display operation by triggering the area title information 25 and/or the comment viewing control 26 displayed in the interaction area 20. This allows switching to the comment information interface for the target topic, where the user can view the comment information associated with that topic.

For example, when the second interface display operation within the topic interface is received, such as when detecting that the current user has triggered the are title information 25 or the comment viewing control 26 in the interactive area 20, the current interface may be switched from the topic interface of the target topic to the comment information interface of the target topic. In that interface, comment information associated with the target topic may be displayed, as illustrated in FIG. 3.

In some embodiments, displaying the comment information associated with the target topic in the comment information interface includes: displaying the comment information associated with the target topic in the comment information interface in accordance with a predetermined order. The method for displaying the topic interface provided in this embodiment may further include: in response to an order switching operation performed within the comment information interface, switching the order of the comment information associated with the target topic displayed in the comment information interface.

The predetermined order may be a default order used when displaying the comment information associated with the target topic in the comment information interface of the target topic, which may be configured as needed. The order switching operation may be a trigger operation for changing the order of the comment information displayed in the comment information interface, for example, triggering a certain sorting control. Different sorting controls may correspond to different orders.

In the above embodiments, when the comment information associated with the target topic is displayed in the comment information interface of the target topic, the comment information may be displayed with different orders. Users may be supported in switching the order used to display the comment information associated with the target topic in the comment information interface, thereby meeting different user requirements for viewing different types of comment information.

For example, when the comment information interface of the target topic is displayed in response to the second interface display operation, the comment information associated with the target topic may be initially displayed in the comment information interface in a predetermined order. Therefore, when an order switching operation is received from the current user within the comment information interface, for example, when it is detected that the current user has triggered a sorting control 30 (as shown in FIG. 3) displayed in the comment information interface, a corresponding order may be determined in response to the order switching operation. The comment information associated with the target topic may then be re-displayed in the comment information interface of the target topic according to the determined order. For example, the order in which the comment information of the target topic is displayed in the comment information interface may be switched to the order corresponding to the order switching operation.

In this embodiment, the topic comment information 21 and the media content comment information 22 may be displayed in the same or different display styles. In some embodiments, as shown in FIG. 2 and FIG. 3, when displaying the topic comment information 21 and/or the media content comment information 22 associated with the target topic in the interaction area 20 and/or in the comment information interface of the topic interface, the topic comment information 21 and the media content comment information 22 may be displayed in different display styles. That is, different display styles may be used to distinguish the topic comment information 21 and the media content comment information 22. In this case, optionally, the topic comment information 21 and the media content comment 22 information are displayed in different display styles.

In this embodiment, the display styles of the topic comment information 21 and the media content comment information 22 may be configured as needed. For example, when the topic comment information 21 associated with the target topic is displayed in the interaction area 20 and/or in the comment information interface, the topic comment information 21 may be displayed without being linked to any media content information. In contrast, when the media content comment information 22 associated with the target topic is displayed in the interaction area 20 and/or the comment information interface of the topic interface, the media content comment information 22 may be displayed together with associated media content information.

In this case, optionally, the interaction area configured to collectively display at least part of comment information associated with the target topic, includes: the interaction area configured to display information content of the topic comment information in the at least part of the comment information; and/or the interaction area configured to display information content of the media content comment information in the at least part of the comment information and media content information of the media content corresponding to the media content comment information.

For example, when displaying the topic comment information associated with the target topic, the information content of the topic comment information may be displayed. When displaying the media content comment information associated with the target topic, both the information content of the media content comment information and the media content information of the media content corresponding to the media content comment information may be associated.

The media content corresponding to a given media content comment information refers to the media content that the comment targets-that is, the media content being commented upon. In other words, the media content comment information is the comment made on its corresponding media content. The type of media content is not limited and may include, for example, videos, images and text, or articles. The media content information corresponding to the media content associated with a media content comment may refer to related information about that media content. Optionally, the media content information may include at least one of the following: a thumbnail of the media content cover, the name of the media content, and poster information of the media content. For example, the thumbnail of the media content cover may be a reduced-size version of the media content's cover image; the name of the media content may be the title of the media, and the poster information of the media content may include details such as the poster's identifier, for instance, a nickname and/or avatar. The specific information displayed can be configured as needed.

**The** method for displaying a topic interface provided in this embodiment includes, receiving a first interface display operation for a target topic, and displaying a topic interface of the target topic in response to the first interface display operation, where the topic interface comprises an interaction area and a media content area, the interaction area is configured to collectively present at least part of comment information associated with the target topic, the comment information comprises topic comment information for the target topic and/or media content comment information for media content associated with the target topic, and the media content area is configured to present at least part of the media content associated with the target topic. By implementing this technical solution, the method enables collective display of at least part of the comment information within the interactive area and display of media content outside of that area. This enriches the content shown in the topic interface, enhances interaction efficiency, and improves the user's ability to view different types of content in the topic interface.

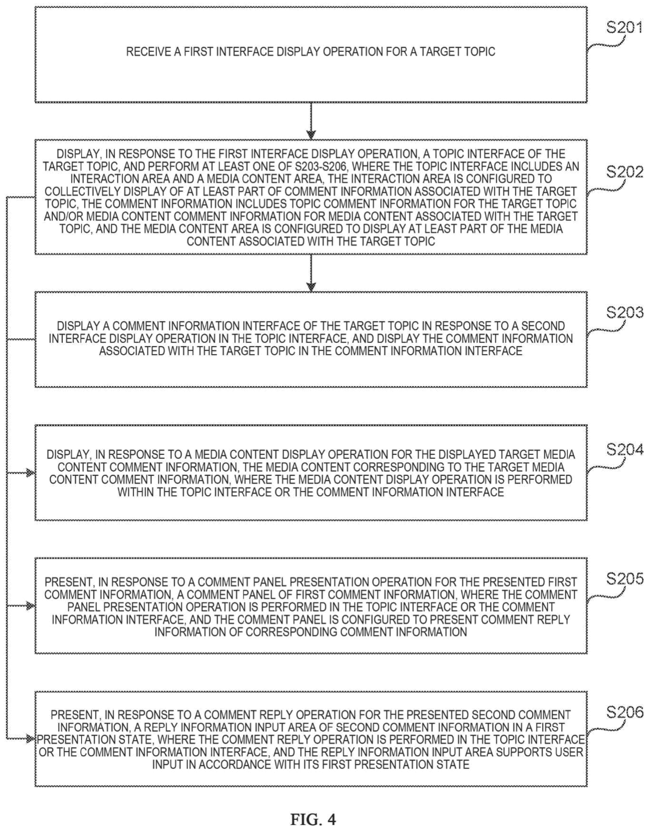

FIG. 4 is a flow diagram illustrating another method for displaying a topic interface according to an embodiment in the disclosure. The solution in this embodiment may be combined with one or more of the optional features described in the above embodiments. Optionally, the method for displaying a topic interface provided in this embodiment further includes at least one of the following: displaying, in response to a media content display operation for the displayed target media content comment information, media content corresponding to the target media content comment information, where the media content display operation is performed within the topic interface or the comment information interface; presenting, in response to a comment panel display operation for the displayed first comment information, a comment panel of the first comment information, where the comment panel display operation is performed within the topic interface or the comment information interface, and the comment panel is configured to display comment reply information of the corresponding comment information; and presenting, in response to a comment reply operation for the displayed second comment information, a reply information input area of the second comment information in a first display state, where the comment reply operation is performed within the topic interface or the comment information interface, and the reply information input area supports user input in accordance that the reply information input area is in the first display state.

Accordingly, as shown in FIG. 4, the method for displaying a topic interface provided in this embodiment may include the following steps.

S201: Receive a first interface display operation for a target topic.

S202: Display, in response to the first interface display operation, a topic interface of the target topic, and perform at least one of S203-S206, where the topic interface includes an interaction area and a media content area, the interaction area is configured to collectively display of at least part of comment information associated with the target topic, the comment information includes topic comment information for the target topic and/or media content comment information for media content associated with the target topic, and the media content area is configured to display at least part of the media content associated with the target topic.

S203: Display a comment information interface of the target topic in response to a second interface display operation in the topic interface, and display the comment information associated with the target topic in the comment information interface, and perform at least one of S204-S206.

S204: Display, in response to a media content display operation for the displayed target media content comment information, the media content corresponding to the target media content comment information, where the media content display operation is performed within the topic interface or the comment information interface.

The media content display operation may be a trigger operation used to instruct the display of the media content corresponding to some media content comment information displayed in the topic interface or the comment information interface. The manner in which the media content display operation is performed is not limited. Optionally, the media content display operation is performed on media content information of media content corresponding to the target media content comment information. For example, the user may perform a media content display operation for a specific media content comment information by triggering the media content information corresponding to the media content comment information displayed in the topic interface or the comment information interface. The target media content comment information may be media content comment information corresponding to the media content display operation, that is, the media content display operation instructs the display of the media content comment information of the corresponding media content.

In this embodiment, users may be supported in viewing the media content corresponding to the media content comment information displayed in the topic interface and/or the comment information interface.

Specifically, when the media content display operation is received for a certain media content comment information 22 (that is, the target media content comment information) shown in the interaction area 20 or the comment information interface of the topic interface, for example, when it is detected that the user has triggered the media content information 27 (shown in FIGS. 2 and 3) corresponding to the media content comment information 22, the media content corresponding to the media content comment information 22 may be displayed.

In this embodiment, the manner of displaying the media content corresponding to the media content comment information can be configured as needed. For example, the media content may be displayed directly within the same interface where the media content display operation is performed; or the system may switch to a dedicated media content display interface and display the media content there.

For the case where the media content corresponding to the media content comment information is displayed in the interface where the media content display operation is triggered, for example, if the operation is triggered within the topic interface, the media content corresponding to the media content comment information may be displayed in a preset media content area of the topic interface, or as an overlay (that is, a floating layer) within the topic interface. Or, if the topic interface includes a specific media content area corresponding to the media content in question, the interface may scroll or jump to that area and display the media content within it. Similarly, if the media content display operation is triggered within the comment information interface, the media content may be shown either in a preset area within that interface or as a floating layer within the topic interface.

S205: Present, in response to a comment panel presentation operation for the presented first comment information, a comment panel of first comment information, where the comment panel presentation operation is performed in the topic interface or the comment information interface, and the comment panel is configured to present comment reply information of corresponding comment information.

The comment panel display operation may be a trigger operation that instructs the display of a comment panel for a specific comment information displayed in the topic interface or the comment information interface. The manner of executing the comment panel display operation is not limited. Optionally, the comment panel display operation may be performed on the content information of the first comment information or on a reply viewing control associated with it. For example, the user may trigger the comment panel display operation by interacting with the content information of a specific comment information or with a reply viewing control shown in the topic interface or comment information interface. The reply viewing control may be a control configured to trigger the viewing of the reply comment information for a given comment, The interface where the reply viewing control is displayed is not limited. As an example, it may be displayed in the topic interface and/or in the comment information interface at a position associated with the corresponding comment information. The following description uses the case where the reply viewing control is displayed in the comment information interface as an example.

The first comment information may refer to the comment information corresponding to the comment panel display operation-that is, the comment information for which the comment panel is to be displayed. This comment information may be either topic comment information or media content comment information. The comment panel for a given comment information is a panel configured to display reply comment information in response to that comment. The reply comment information may include reply messages, such as child comments or nested responses to the original comment.

In this embodiment, users are supported in viewing the reply comment information associated with comment information displayed in the topic interface and/or comment information interface.

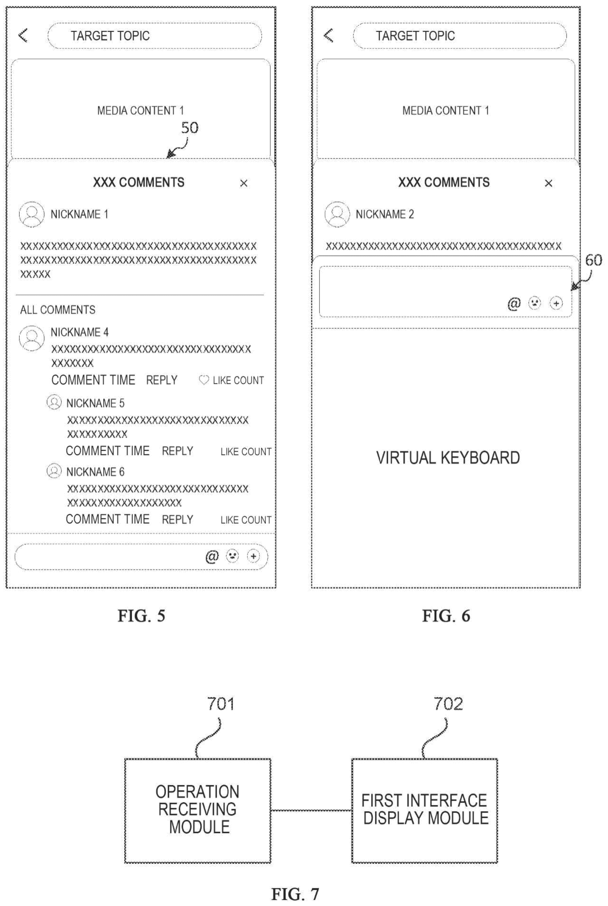

Specifically, when a comment panel display operation is received for a specific comment information (that is, the first comment information) shown in the interactive area 20 of the topic interface or in the comment information interface-such as when it is detected that the user has triggered the content of a comment or the reply viewing control 31 displayed in those interfaces (as shown in FIG. 3)-a comment panel 50 for that comment may be displayed. The comment panel 50 may display at least part of the reply comment information for the selected comment. Additionally, the content information of the comment itself and/or a reply information input area in a second display state may also be displayed. For instance, the panel 50 may display the main comment content and, below it, the reply comment information and a reply information input area in the second display state. This is illustrated in FIG. 5, where the comment panel is displayed within the topic interface in response to a display operation on the first comment in the interaction area 20 .

S206: Present, in response to a comment reply operation for the presented second comment information, a reply information input area of second comment information in a first presentation state, where the comment reply operation is performed in the topic interface or the comment information interface, and the reply information input area supports user input in accordance with its first presentation state.

The comment reply operation may be a trigger operation that instructs the reply information input area for a certain comment information-displayed in the topic interface or the comment information interface-to be displayed in a first display state. The manner in which the execution of the comment reply operation is not limited. Optionally, the comment reply operation may act upon the reply control of the second comment information or upon the reply information input area of the second comment information in its second display state. The reply control for the second comment information is displayed within the topic interface or the comment information interface. The reply information input area in the second display state is displayed within the comment panel of the second comment information and does not support user input while in the second display state.

The reply information input area may be an area for inputting information content of the comment reply information. The reply information input area may have a first display state and a second display state. When in the first display state, the reply information input area may support user input. When in the second display state, the reply information input area does not support user input. The display position of the reply information input area in the second display state may be set as needed. Optionally, the reply information input area of a certain comment information in the second display state may be displayed within the comment panel of the comment information. The reply control of a certain comment information may be a control for triggering the display of the reply information input area of the comment information in the first display state so as to input the comment information, which may be displayed in a position associated with the comment information in the topic interface and/or the comment information interface.

The second comment information may be comment information corresponding to the comment reply operation. That is, the comment reply operation instructs that the comment information of the reply information input area is to be displayed in the first display state. The second comment information and the first comment information may be the same or different.

In this embodiment, users may be supported in replying to the comment information displayed in the topic interface and/or the comment information interface.

Specifically, when the comment reply operation is received for a certain comment information (that is, the second comment information) displayed in the interaction area 20 of the topic interface or the comment information interface , for example, when it is detected that the current user triggers the reply control 28 of a certain comment information displayed in the interaction area 20 of the topic interface or the comment information interface (as shown in FIGS. 2 and 3), or when it is detected that the current user triggers the reply information input area displayed in the second display state in the comment panel of a certain comment information, the reply information input area 60 of the comment information can be displayed in the second display state, and a virtual keyboard may be further displayed, as shown in FIG. 6 (FIG. 6 is explained by taking the comment reply operation performed in the topic interface and the second comment information being the second comment information displayed in the interaction area 20 as an example), so that the current user may input the information content of the comment reply information of the comment information in the reply information input area 60, and then reply the comment information.

In this embodiment, when the reply information input area of the second comment information is displayed in the first display state, the comment panel of the second comment information may be displayed or not. For example, when the reply information input area of the second comment information is displayed in the first display state, the comment panel of the second comment information may be displayed, for example, the comment panel of the second comment information is displayed in the interface on which the comment reply operation is performed. Then, the reply information input area of the second comment information is displayed in the upper layer of the comment panel of the second comment information in the first display state, as shown in FIG. 6. At this time, optionally, the use of the first display state to display the reply information input area of the second comment information includes: presenting the reply information input area of the second comment information in a layer above a comment panel of the second comment information, where the reply information input area is presented to be in the first presentation state in the layer above the comment panel of the second comment information. The comment panel of the second comment information can be used to display the comment reply information of the second comment information, and can also be further used to display the information content of the second comment information and/or use the second display state to display the reply information input area of the second comment information, and its display style is similar to the comment panel of the first comment information, which will not be repeated here.

In this embodiment, after the reply information input area of the second comment information is displayed in the first display state, the current user can input the information content of the comment reply information that he wants to send for the second comment information in the reply information input area, and can perform the reply information sending operation after the input is completed. Accordingly, when the current application receives the reply information sending operation performed by the current user, it can use the content entered by the current user in the reply information input area as the information content of the target comment reply information, and send the target comment reply information. The target comment reply information may be a comment reply information for the second comment information with the content entered in the reply information input area as the information content. The reply information sending operation may be a trigger operation that instructs the sending of the target comment reply information, such as an operation that triggers a send control.

In some embodiments, when the target comment reply information is sent in response to a reply information sending operation, the target comment reply information may be further displayed, such as displaying the target comment reply information in the comment panel of the second comment information, so that the current user can view it. At this time, optionally, after the reply information input area of the second comment information is displayed in the first display state, it also includes: sending target comment reply information , in response to a reply information sending operation, and presenting the target comment reply information in a comment panel of the second comment information, where the content input in the reply information input area serves as information content of the target comment reply information.

In the method for displaying a topic interface provided in the embodiments in the disclosure, users are supported in viewing the media content corresponding to the comment information of the media content displayed in the topic interface and/or the comment information interface, in viewing the comment reply information of the comment information displayed in the topic interface and/or the comment information interface, and/or in replying to the comment information displayed in the topic interface and/or the comment information interface, which can further enrich the interaction methods supported by the topic interface and/or the comment information interface to meet the different needs of users.

FIG. 7 is a structural block diagram of an apparatus for displaying a topic interface according to an embodiment in the disclosure. The apparatus may be implemented by software and/or hardware, and may be configured in an electronic device, and typically, may be configured in a mobile phone or a tablet computer, and may display comment information associated with a topic in a preset area of a topic interface, and display media content associated with a topic outside the preset area by performing a method for displaying a topic interface. As shown in FIG. 7, the apparatus for displaying a topic interface provided in this embodiment may include an operation receiving module 701 and a first interface display module 702.

The operation receiving module 701 is configured to receive a first interface display operation for a target topic;

A first interface display module 702, configured to display a topic interface of the target topic in response to the first interface display operation, where the topic interface includes an interaction area and a media content area, the interaction area is used to centralize display of at least part of comment information associated with the target topic and/or media content comment information of media content associated with the target topic, and the media content area is used to display at least part of the media content associated with the target topic.

The apparatus for displaying a topic interface provided in the embodiment receives the first interface display operation for the target topic via the operation receiving module, and displays the topic interface of the target topic in response to the first interface display operation via the first interface display module. The topic interface includes an interaction area and a media content area. The interactive area is used to collectively display at least part of the comment information associated with the target topic. The comment information includes topic comment information for the target topic and/or media content comment information for the media content associated with the target topic. The media content area is used to display at least part of the media content associated with the target topic. The embodiment, by adopting the above-mentioned technical solution, collectively displays at least part of the comment information associated with the topic in the interaction area of the topic interface, and displays the media content associated with the topic outside the interaction area, which can enrich the content displayed in the topic interface, improve the interaction efficiency, and improve the efficiency of users viewing different types of content in the topic interface.

Further, the apparatus for displaying a topic interface provided in the embodiment may further include: a second interface display module, configured to display a comment information interface of the target topic in response to a second interface display operation performed in the topic interface, and present the comment information associated with the target topic in the comment information interface.

In the above embodiment, the second interface display operation may be performed on the interaction area.

In the above embodiment, the interaction area may further display area title information and/or a comment information viewing control, and the area title information and/or the comment information viewing control may be configured to trigger execution of the second interface display operation.

In above embodiment, the second interface display module may be configured to present the comment information associated with the target topic in the comment information interface in accordance with a predetermined order; the apparatus for displaying a topic interface provided in the embodiment may further include: an order switching module, configured to switch, in response to an order switching operation in the comment information interface, an order of the comment information associated with the target topic that is presented in the comment information interface.

In the above embodiment, the topic comment information and the media content comment information may be presented in different presentation styles.

In the above embodiment, the interaction area configured to collectively present at least part of the comment information associated with the target topic may include: the interaction area being configured to present information content of the topic comment information in the at least part of the comment information; and/or the interaction area being configured to present information content of the media content comment information in the at least part of the comment information and media content information of the media content corresponding to the media content comment information.

In the above embodiment, the media content information may include at least one of a thumbnail of a media content cover, a media content name, and media content poster information.

In the above embodiment, a comment input control may be further presented in the interaction area, and the comment input control may be configured to allow a current user to send the topic comment information associated with the target topic.

Further, the apparatus for displaying a topic interface provided in the embodiment may further include at least one of the following: a media content display module, configured to present, in response to a media content presentation operation for the presented target media content comment information, media content corresponding to target media content comment information, where the media content presentation operation is performed in the topic interface or the comment information interface; a comment panel display module, configured to present, in response to a comment panel presentation operation for the presented first comment information, a comment panel of first comment information, where the comment panel presentation operation is performed in the topic interface or the comment information interface, and the comment panel is configured to present comment reply information of corresponding comment information; an input area display module, configured to present, in response to a comment reply operation for the presented second comment information, a reply information input area of second comment information in a first presentation state, where the comment reply operation is performed in the topic interface or the comment information interface, and the reply information input area supports user input in accordance with its first presentation state.

In the foregoing solution, the media content display operation may be perform on media content information of the media content corresponding to the target media content comment information.

In the above embodiment the comment panel display operation may be perform on the information content of the first comment information or on the reply view control of the first comment information.

In the above embodiment, the comment reply operation may be performed on the reply control of the second comment information or on the reply information input area of the second comment information in the second display state, the reply control of the second comment information is presented in the topic interface or the comment information interface of the target topic, the reply information input area of the second comment information in the second presentation state is presented in the comment panel of the second comment information, and the reply information input area fails to support the user input in accordance with its second presentation state.

In the above embodiment, the input area display module may be configured to present the reply information input area of the second comment information in a layer above a comment panel of the second comment information, where the reply information input area is presented to be in the first presentation state in the layer above the comment panel of the second comment information.

Further, the apparatus for displaying a topic interface provided in the embodiment may further include: an information sending module, configured to, send target comment reply information , in response to a reply information sending operation, and present the target comment reply information in a comment panel of the second comment information, where the content input in the reply information input area serves as information content of the target comment reply information.

The apparatus for displaying a topic interface provided in the embodiment in the disclosure may perform the method for displaying a topic interface provided by any embodiment in the disclosure, and has functional modules and beneficial effects corresponding to the method for displaying a topic interface. For technical details not described in detail in this embodiment, reference may be made to the method for displaying a topic interface provided by any embodiment in the disclosure.

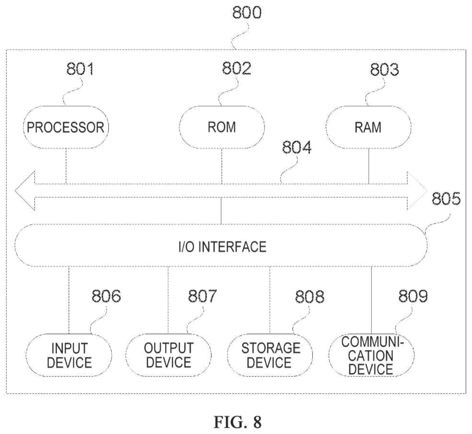

FIG. 8 is a schematic structural diagram of an electronic device (for example, a terminal device) 800 suitable for implementing the embodiments in the disclosure. The terminal device in the embodiments in the disclosure may include, but is not limited to, a mobile terminal such as a mobile phone, a notebook computer, a digital broadcast receiver, a PDA (personal digital assistant), a PAD (tablet computer), a PMP (portable multimedia player), an in-vehicle terminal (for example, an in-vehicle navigation terminal), and a fixed terminal such as a digital TV, a desktop computer, or the like. The electronic device shown in FIG. 8 is merely an example, and should not impose any limitation on the functions and scope of use of the embodiments in the disclosure.

As shown in FIG. 8, the electronic device 800 may include a processing device (for example, a central processing unit, a graphics processor, etc. ) 801, which may perform various appropriate actions and processing according to a program stored in a read-only memory (ROM) 802 or a program loaded into a random access memory (RAM) 803 from a storage device 808. In the RAM 803, various programs and data required by the operation of the electronic device 800 are also stored. The processing device 801, the ROM 802, and the RAM 803 are connected to each other through a bus 804. Input/output (I/O) interface 805 is also connected to bus 804.

Generally, the following devices may be connected to the I/O interface 805: an input device 806 including, for example, a touch screen, a touchpad, a keyboard, a mouse, a camera, a microphone, an accelerometer, a gyroscope, etc. ; an output device 807 including, for example, a liquid crystal display (LCD), a speaker, a vibrator, etc. ; a storage device 808 including, for example, a magnetic tape, a hard disk, etc. ; and a communication device 809. The communication device 809 may allow the electronic device 800 to communicate wirelessly or wired with other devices to exchange data. While FIG. 8 shows an electronic device 800 having various devices, it should be understood that it is not required to implement or have all illustrated devices. More or fewer devices may alternatively be implemented or provided.

In particular, according to an embodiment in the disclosure, the process described above with reference to the flowchart may be implemented as a computer software program. For example, embodiments in the disclosure include a computer program product comprising a computer program embodied on a non-transitory computer readable medium, the computer program comprising program code for performing the method shown in the flowchart. In such embodiments, the computer program may be downloaded and installed from the network through the communication device 809, or installed from the storage device 808, or from the ROM 802. When the computer program is executed by the processing apparatus 801, the foregoing functions defined in the method of the embodiments in the disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the disclosure, a computer-readable storage medium may be any tangible medium containing or storing a program that may be used by or in connection with an instruction execution system, apparatus, or device. In the disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

In some implementations, the client, server may communicate using any currently known or future developed network protocol, such as HTTP (HyperText Transfer Protocol), and may be interconnected with any form or medium of digital data communication (e.g., a communication network). Examples of communication networks include local area networks ("LANs"), wide area networks ( "WANs"), internets (e.g., the Internet), and peer-to-peer networks (e.g., ad hoc peer-to-peer networks), as well as any currently known or future developed networks.

The computer-readable medium described above may be included in the electronic device; or may be separately present without being assembled into the electronic device.

The computer readable medium carries one or more programs, and when the one or more programs are executed by the electronic device, the electronic device is caused to: receive a first interface display operation for a target topic; in response to the first interface display operation, display a topic interface of the target topic, where the topic interface comprises an interaction area and a media content area, the interaction area is used for collectively displaying at least part of comment information associated with the target topic, the comment information comprises topic comment information for the target topic and/or media content comment information of media content associated with the target topic, and the media content area is used for displaying at least part of the media content associated with the target topic.

Computer program code for performing the operations in the disclosure may be written in one or more programming languages, including, but not limited to, object oriented programming languages such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments in the disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments in the disclosure may be implemented in software, or may be implemented in hardware. The name of the module does not constitute a limitation on the unit itself in some cases.

The functions described above may be performed, at least in part, by one or more hardware logic components. For example, without limitation, illustrative types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to one or more embodiments in the disclosure, an example 1 provides a topic interface display method, comprising: receiving a first interface display operation for a target topic; in response to the first interface display operation, displaying a topic interface of the target topic, where the topic interface comprises an interaction area and a media content area, the interaction area is used for collectively displaying at least part of comment information associated with the target topic, the comment information comprises topic comment information for the target topic and/or media content comment information of media content associated with the target topic, and the media content area is used for displaying at least part of the media content associated with the target topic.

According to one or more embodiments in the disclosure, after displaying the topic interface of the target topic, the method according to example 2 further comprises: displaying a comment information interface of the target topic in response to a second interface display operation acting on the topic interface, and displaying comment information associated with the target topic in the comment information interface.

Example 3 according to one or more embodiments in the disclosure, the second interface display operation acting on the interaction area.

According to one or more embodiments in the disclosure, according to the method of example 3, the interaction area further displays area title information and/or a comment information viewing control, and the area title information and/or the comment information viewing control is used to trigger execution of the second interface display operation.

According to one or more embodiments in the disclosure, the displaying comment information associated with the target topic in the comment information interface according to example 5 includes: displaying comment information associated with the target topic in the comment information interface in a preset sorting manner; the method further includes: in response to a sequential switching operation acting on the comment information interface, switching a sorting manner when comment information associated with the target topic is displayed in the comment information interface.

According to one or more embodiments in the disclosure, the method according to example 1, where the topic comment information and the media content comment information have different display styles.

According to one or more embodiments in the disclosure, the method according to example 6, where the interaction area is used for collectively displaying at least part of comment information associated with the target topic comprises: the interaction area is used for displaying information content of topic comment information in the at least part of comment information; and/or the interaction area is used for displaying information content of media content comment information in the at least part of comment information and media content information of media content corresponding to the media content comment information.

Example 8 according to one or more embodiments in the disclosure, the media content information includes at least one of a thumbnail of a media content cover, a media content name, and media content poster information.

According to one or more embodiments in the disclosure, the method according to example 1, where a comment input control is further displayed in the interaction area, and the comment input control is used by the current user to send the topic comment information associated with the target topic.

According to one or more embodiments in the disclosure, the method according to any one of examples 1-9 further includes at least one of: displaying, in response to a media content display operation for the displayed target media content comment information, media content corresponding to the target media content comment information, where the media content display operation acts within the topic interface or the comment information interface; in response to a comment panel display operation for the displayed first comment information, displaying a comment panel of the first comment information, where the comment panel display operation is performed in the topic interface or the comment information interface, and the comment panel is configured to display comment reply information of the corresponding comment information; and in response to a comment reply operation for the displayed second comment information, displaying a reply information input area of the second comment information by using a first display state, where the comment reply operation is performed in the topic interface or the comment information interface, and the reply information input area supports a user to input when the reply information input area is in the first display state.

Example 11 according to one or more embodiments in the disclosure, the media content display operation is performed on media content information of media content corresponding to the target media content comment information.

According to one or more embodiments in the disclosure, the comment panel displays an information content acting on the first comment information or a reply viewing control acting on the first comment information according to the method of example 10.

According to one or more embodiments in the disclosure, the comment reply operation is performed on the reply control of the second comment information or the reply information input area acting on the second comment information in the second display state, the reply control of the second comment information is displayed in the comment information interface of the topic interface or the target topic, the reply information input area of the second comment information in the second display state is displayed in the comment panel of the second comment information, and the reply information input area does not support the user to input when the reply information input area is in the second display state.

According to one or more embodiments in the disclosure, the method for displaying a reply information input area of the second comment information by using the first display state according to example 14 includes: displaying a reply information input area of the second comment information on an upper layer of the comment panel of the second comment information, where the reply information input area is displayed in the upper layer of the comment panel of the second comment information as the first display state.

According to one or more embodiments in the disclosure, after the displaying the reply information input area of the second comment information by using the first display state, the method further includes: in response to the reply information sending operation, taking the content input in the reply information input area as the information content of the target comment reply information, sending the target comment reply information, and displaying the target comment reply information in the comment panel of the second comment information.

According to one or more embodiments in the disclosure, an example 16 provides a topic interface display device, including: an operation receiving module, configured to receive a first interface display operation for a target topic; and a first interface display module, configured to display a topic interface of the target topic in response to the first interface display operation, where the topic interface includes an interaction area and a media content area, the interaction area is used to centralize display at least part of comment information associated with the target topic and/or media content comment information of media content associated with the target topic, and the media content area is used to display at least part of the media content associated with the target topic.

According to one or more embodiments in the disclosure, an example 17 provides an electronic device, including: one or more processors; a memory, configured to store one or more programs, where the one or more programs, when executed by the one or more processors, cause the one or more processors to implement the topic interface display method according to any one of examples 1-15.

According to one or more embodiments in the disclosure, an example 18 provides a computer-readable storage medium having stored thereon a computer program, the program, when executed by a processor, implements the method for displaying a topic interface according to any one of examples 1-15.

The above description is merely an illustration of the preferred embodiments in the disclosure and the principles of the applied technology. It should be understood by those skilled in the art that the disclosure in the disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the disclosure. Certain features described in the context of separate embodiments may also be implemented in combination in a single embodiment. Conversely, the various features described in the context of a single embodiment may also be implemented in multiple embodiments either individually or in any suitable sub-combination.

Although the present subject matter has been described in language specific to structural features and/or methodological acts, it is to be understood that the subject matter defined in the appended claims is not necessarily limited to the specific features or acts described above. Rather, the specific features and acts described above are merely illustrative forms of implementing the claims.

## Claims

1. A method for displaying a topic interface, comprising:
receiving a first interface display operation for a target topic;
displaying a topic interface of the target topic in response to the first interface display operation, wherein the topic interface comprises an interaction area and a media content area, the interaction area is configured to collectively present at least part of comment information associated with the target topic, the comment information comprises topic comment information for the target topic and/or media content comment information for media content associated with the target topic, and the media content area is configured to present at least part of the media content associated with the target topic.

2. The method of claim 1, wherein after displaying the topic interface of the target topic, the method further comprises:
displaying a comment information interface of the target topic in response to a second interface display operation performed in the topic interface, and presenting the comment information associated with the target topic in the comment information interface.

3. The method of claim 2, wherein the second interface display operation is performed on the interaction area.

4. The method of claim 3, wherein area title information and/or a comment information viewing control is further presented in the interaction area, and the area title information and/or the comment information viewing control is configured to trigger execution of the second interface display operation.

5. The method of claim 2, wherein presenting the comment information associated with the target topic in the comment information interface comprises:
presenting the comment information associated with the target topic in the comment information interface in accordance with a predetermined order.

6. The method of claim 5, further comprising:
switching, in response to an order switching operation in the comment information interface, an order of the comment information associated with the target topic that is presented in the comment information interface.

7. The method of claim 1, wherein the topic comment information and the media content comment information are presented in different presentation styles.

8. The method of claim 7, wherein the interaction area configured to collectively present at least part of the comment information associated with the target topic comprises:
the interaction area being configured to present information content of the topic comment information in the at least part of the comment information; and/or
the interaction area being configured to present information content of the media content comment information in the at least part of the comment information and media content information of the media content corresponding to the media content comment information.

9. The method of claim 8, wherein the media content information comprises at least one of a thumbnail of a media content cover, a media content name, and media content poster information.

10. The method of claim 1, wherein a comment input control is further presented in the interaction area, and the comment input control is configured to allow a current user to send the topic comment information associated with the target topic.

11. The method of any one of claims 1 to 10, further comprising at least one of:
presenting, in response to a media content presentation operation for the presented target media content comment information, media content corresponding to target media content comment information, wherein the media content presentation operation is performed in the topic interface or the comment information interface;
presenting, in response to a comment panel presentation operation for the presented first comment information, a comment panel of the first comment information, wherein the comment panel presentation operation is performed in the topic interface or the comment information interface, and the comment panel is configured to present comment reply information of corresponding comment information;
presenting, in response to a comment reply operation for the presented second comment information, a reply information input area of the second comment information in a first presentation state, wherein the comment reply operation is performed in the topic interface or the comment information interface, and the reply information input area supports user input in accordance with its first presentation state.

12. The method of claim 11, wherein the media content presentation operation is performed on media content information of the media content corresponding to the target media content comment information.

13. The method of claim 11, wherein the comment panel presentation operation is performed on information content of the first comment information or on a reply viewing control of the first comment information.

14. The method of claim 11, wherein the comment reply operation is performed on a reply control of the second comment information or on a reply information input area of the second comment information in a second presentation state, the reply control of the second comment information is presented in the topic interface or the comment information interface of the target topic, the reply information input area of the second comment information in the second presentation state is presented in the comment panel of the second comment information, and the reply information input area fails to support the user input in accordance with its second presentation state.

15. The method of claim 11, wherein presenting the reply information input area of the second comment information in the first presentation state comprises:
presenting the reply information input area of the second comment information in a layer above a comment panel of the second comment information, wherein the reply information input area is presented to be in the first presentation state in the layer above the comment panel of the second comment information.

16. The method of claim 11, wherein after presenting the reply information input area of the second comment information in the first presentation state, the method further comprises:
sending target comment reply information, in response to a reply information sending operation, and presenting the target comment reply information in a comment panel of the second comment information, wherein the content input in the reply information input area serves as information content of the target comment reply information.

17. An apparatus for displaying a topic interface, comprising:
an operation receiving module configured to receive a first interface display operation for a target topic;
a first interface display module configured to display a topic interface of the target topic in response to the first interface display operation, wherein the topic interface comprises an interaction area and a media content area, the interaction area is configured to collectively present at least part of comment information associated with the target topic, the comment information comprises topic comment information for the target topic and/or media content comment information for media content associated with the target topic, and the media content area is configured to present at least part of the media content associated with the target topic.

18. An electronic device, comprising:
at least one processor; and
a memory communicatively connected to the at least one processor;
wherein the memory stores a computer program executable by the at least one processor, and the computer program is executed by the at least one processor to enable the at least one processor to perform the method for displaying a topic interface of any of claims 1 to 16.

19. A computer-readable storage medium storing computer instructions for causing a processor to perform the method for displaying a topic interface of any of claims 1 to 16.
